# EUROPÄISCHE PATENTSCHRIFT

(11) **EP 0 990 884 B1**
(45) Veröffentlichungstag und Bekanntmachung des Hinweises auf die Patenterteilung: **19.06.2002**
(21) Anmeldenummer: 99119476.2
(22) Anmeldetag: 30.09.1999
(51) Int. Cl.: G01L 5/10, G01L 1/22

(54) **Verfahren zur Fertigung eines in einem Kraftsensor zur Messung von Kräften eingesetzten Federkörpers sowie ein solcher Federkörper**
Method of manufacturing a spring member inserted in a force measuring device and such a spring member
Procédé pour la fabrication d'un élément ressort inséré dans un capteur de force ainsi qu' un tel élément ressort

(30) Priorität: 02.10.1998 DE 19845341
(43) Veröffentlichungstag der Anmeldung: 05.04.2000
(73) Patentinhaber: Haehne Elektronische Messgeräte GmbH, 40699 Erkrath (DE)
(72) Erfinder: Quiel, Manfred, 42719 Solingen (DE); Nguyen-Duc, Hung-Viet, 47058 Duisburg (DE)
(74) Vertreter: Cohausz & Florack

(56) Entgegenhaltungen:
- DE-A- 4 108 555
- DE-A- 19 511 110
- DE-U- 9 104 628
- US-A- 4 581 947
- US-A- 4 899 599

## Beschreibung

Die Erfindung betrifft ein Verfahren zur Fertigung eines in einem Kraftsensor zur Messung von Kräften eingesetzten Federkörpers.

Kraftsensoren zur Messung von Kräften werden beispielsweise zur Bandzugmessung überall dort eingesetzt, wo laufende Warenbahnen wie Papierbahnen, Bänder, Folien, Drähte oder Kabel kontinuierlich verarbeitet bzw. veredelt werden. Sie dienen dem Zweck, die Zugkräfte, die in der Warenbahn auftreten, direkt zu messen, so daß die Ausgangsgröße der Meßvorrichtung für einen nachgeschalteten Regelkreis zur Verfügung steht.

Solche Kraftsensoren umfassen dabei in der Regel einen Federkörper, der eine Aufnahmemöglichkeit für einen Teil, eines einer Belastung ausgesetzten Elements aufweist. Das Element kann dabei beispielsweise durch eine Welle gegeben sein, deren Enden in dem Federkörper gelagert sind, oder auch in einer starren Achse, die eine innengelagerte Walze hält. Dabei ist der Federkörper so ausgelegt, daß eine von dem Element auf den Federkörper ausgeübte Kraft eine Oberflächenänderung des Federkörpers hervorruft. Zur Erfassung der Oberflächenänderung sind auf dem Federkörper Dehnmeßstreifen angebracht, die ein die Oberflächenänderung und damit die Kraft abbildendes Spannungssignal ausgeben. Zum Schutz des mit den Dehnmeßstreifen versehenen Federkörpers sowie für eine einfache Montage wird der Federkörper außerdem in der Regel in einem Außengehäuse untergebracht.

Bei der aus der DE 41 08 555 A1 bekannten Zugkraftmeßeinrichtung wird der eingesetzte Federkörper dabei beispielsweise durch einen mit drei miteinander verbundenen Spalten versehen Körper gebildet, wobei die Spalten jeweils durch Bohrungen abgeschlossen sind und wobei der Spaltverlauf einen Doppelbiegebalken entstehen läßt.

In der DE 195 11 110 A wird ein Federkörper für einen Kraftsensor beschrieben, der eine Aufnahmebohrung sowie achsparallele Bohrungen und Spalten zur Erzielung der Federwirkung aufweist. Die gewünschte Steifigkeit wird dabei beispielsweise durch die Dimensionierung der Bohrungen bestimmt. Dehnmeßstreifen werden eingesetzt, um eine Verformungen in elektrische Signale umzuwandeln.

Des weiteren wird in der US-A-4 899 599 ein Federkörper vorgeschlagen, der eine einen Block durchdringende, U-förmige Öffnung aufweist. An den vier Eckpunkten der U-förmigen Öffnung ist dieselbe kreisförmig in Richtung der oberen und unteren Begrenzungsflächen des Blocks erweitert, so daß an diesen Stellen besonders dünne Bereiche des Blocks entstehen. Ober- oder unterhalb der dünnen Bereiche werden Dehnmeßstreifen zur Erfassung von Verformungen des Blocks angebracht.

Ein Nachteil der bekannten Herstellungsverfahren für die Federkörper solcher Kraftsensoren besteht darin, daß für sehr genaue Messungen ein auf den konkreten Nennkraftwert der jeweiligen Anwendung ausgelegter Federkörper erforderlich ist. Aus diesem Grund muß für jeden Anwendungsfall für die Herstellung der Federkörper, die üblicherweise durch Erodieren oder Fräsen hergestellt werden, eine neue Einstellung der Fertigungsmaschinen erfolgen. Die Herstellung der Federkörper ist dadurch wenig flexibel und teuer.

Der Erfindung liegt die Aufgabe zugrunde, ein flexibles und kostengünstiges Verfahren zur Fertigung eines Federkörpers eines Kraftsensors für die Messung von Kräften zur Verfügung zu stellen. Ebenso liegt der Erfindung die Aufgabe zugrunde, einen flexibel anpaßbaren Federkörper eines Kraftsensors für die Messung von Kräften zu schaffen.

Die Aufgabe wird gelöst durch ein Verfahren zur Fertigung eines in einem Kraftsensor zur Messung von Kräften eingesetzten Federkörpers, der eine Aufnahmebohrung zur Aufnahme eines Teils eines einer Belastung ausgesetzten Elementes aufweist und dessen Federwirkung mit dem durch bezüglich der Aufnahmebohrung achsparallele Bohrungen und Spalten erzielt wird, wobei an geeigneter Stelle an dem Federkörper Dehnmeßstreifen aufgebracht werden zum Erfassen einer durch die durch das Element ausgeübten Kraft bewirkten Oberflächendehnung und zum Erzeugen einer diese Oberflächendehnung abbildenden Spannung, und wobei mit der Größe der Bohrungen der gewünschte Nennkraftwert festlegt wird,
das die folgenden Schritte umfaßt:
a) Erstellen eines Vorprodukts für den Federkörper mit Aufnahmebohrung, sowie durchgehenden Spalten und Bohrungen, wobei der Durchmesser der Bohrungen entsprechend dem größten gewünschten Meßbereich für eine Anzahl von Federkörpern gewählt wird,
b) Erweitern der Bohrungen des Federkörpers entsprechend einem gewünschten Nennkraftwert für eine spezielle Applikation, und
c) Verbinden von Bohrungen und Spalten des Federkörpers durch Auftrennen der sie verbindenden Bereiche des Federkörpers zur Erzeugung der Federwirkung.

Die Erfindung zeichnet sich dadurch aus, daß zunächst ein Grundkörper eines Federkörpers in größerer Stückzahl einheitlich gefertigt werden kann. Erst anschließend wird durch die anwendungspezifische Erweiterung der Bohrungen die Feinabtimmung auf einen gewünschten Nennkraftwert durchgeführt. Diese Maßnahmen erlauben eine preisgünstigere, flexiblere und vereinfachte Fertigung.

Vorzugsweise werden die Bohrungen und Spalten in dem Federkörper derart positioniert (Schritt a)) und miteinander verbunden (Schritt c)), daß sich ein Doppelbiegebalken ergibt. Dadurch erhält man einen erfindungsgemäß flexibel herstellbaren Federkörper, der gleichzeitig die für Doppelbiegebalken typischen, guten Eigenschaften aufweist.

Eine weitere fertigungstechnisch bevorzugte Gestaltung besteht darin, daß die in Schritt a) angebrachten Spalten zwei von außen zugängliche Spalten sind, die jeweils bis kurz vor eine der Bohrungen reichen und die in Schritt c) bis zu dieser jeweiligen Bohrung verlängert werden. Durch die Zugänglichkeit von Außen kann der Fertigungsschritt c) besonders einfach erfolgen.

Da bei dem erfindungsgemäßen Verfahren die Qualität der Verbindungen von Spalten und Bohrungen keine Auswirkung auf die Sensorgenauigkeit haben, kann das Herstellen der Verbindung in einfacher Weise durch Sägen, sogar grob von Hand, erfolgen. Andere geeignete Methoden, wie z.B. Erodieren, sind ebenso einsetzbar.

Des weiteren wird bevorzugt, daß die Dehnmeßstreifen über den vier oder über ausgewählte zwei der für die Meßbereichsanpassung erweiterten oder zu erweiternden Bohrungen angebracht werden. Diese Positionierung der Dehnmeßstreifen erlaubt eine einfache Meßbereichsanpassung durch die Schwächung des Federkörpers, insbesondere der Biegebalken, auf der Rückseite unter den Dehnmeßstreifen, da an diesen Stellen eine Erweiterung der Bohrungen einen unmittelbaren und genau einzustellenden Einfluß auf das Ausmaß der Oberflächenänderung bei Krafteinwirkung gegeben ist. Dennoch ist es auch in diesem Fall möglich, die Dehnmeßstreifen bereits vor der Erweiterung der Bohrungen aufzubringen, da die den Dehnmeßstreifen abgewandten Seiten der Bohrungen weiterhin frei zugänglich sind.

Als Einsatzgebiet für den erfindungsgemäß gefertigten Federkörper von Kraftsensoren zur Kräftemessung sind insbesondere Bandzugmessungen vorgesehen, bei denen eine große Genauigkeit der Messungen erforderlich ist. Ein weiteres mögliches Einsatzgebiet ist im Bereich von Andruckmessungen gegeben.

Weitere bevorzugte Ausgestaltungen der Erfindung gehen aus den Unteransprüchen hervor.

Das erfindungsgemäße Verfahren und die erfindungsgemäße Vorrichtung werden im folgenden anhand eines Ausführungsbeispiels unter Bezugnahme auf eine Zeichnung näher beschrieben.

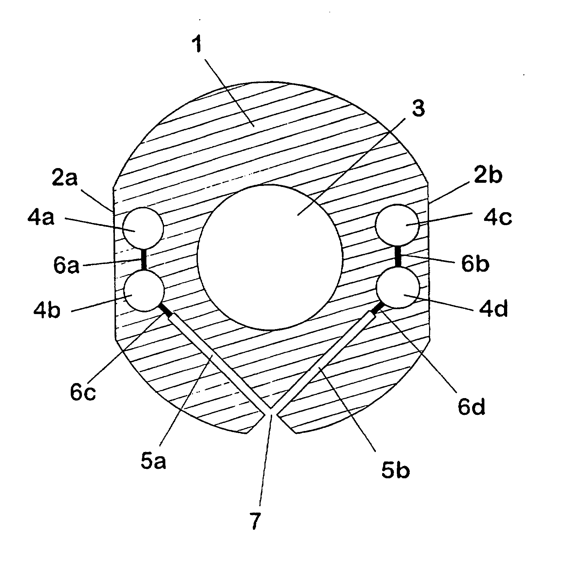

In der einzigen Figur ist ein nach dem erfindungsgemäßen Verfahren hergestellter Federkörper 1 eines Kraftmeßsensors zur Messung von Kräften ohne Dehnmeßstreifen dargestellt.

Der Federkörper 1 ist im wesentlichen zylinderförmig mit sich gegenüberliegend abgeflachten Seiten 2a,2b und weist eine Aufnahmebohrung 3 auf. Rechts und links von der Aufnahmebohrung 3 sind übereinander angeordnet jeweils zwei weitere Bohrungen 4a-4d vorhanden, die sich achsparallel zu der Aufnahmebohrung 3 durch den gesamten Federkörper erstrecken. Des weiteren verlaufen ebenso zwei Spalten 5a,5b durch den gesamten Federkörper 1. Jede der Spalten 5a,5b ist mit zwei übereinander liegenden Bohrungen 4a/4b bzw. 4c/4d verbunden, wodurch in Verbindung mit den abgeflachten Seiten 2a,2b eine Doppelbiegebalkenanordnung zur Verfügung steht.

Der dargestellte Federkörper 1 wird wie folgt hergestellt:

Zunächst wird aus Vollzylindern mit zwei sich parallel gegenüberliegenden abgeflachten Seiten 2a,2b eine Serie von gleichen Grundkörpern für verschiedene Anwendungen, die jedoch eine Aufnahmebohrung 3 des gleichen Durchmessers benötigen, hergestellt.

Die Vollzylinder werden zu diesem Zweck mit einer zentralen Aufnahmebohrung 3 versehen, die der Aufnahme eines einer Belastung ausgesetzten Elements bzw. eines Teils eines solchen Elements dienen soll. Auf beiden Seiten der Aufnahmebohrung 3 werden jeweils zwei weitere, dicht übereinander angeordnete Bohrungen 4a,4b bzw. 4c,4d angebracht. Die vier Bohrungen 4a-4b sind dabei ausgelegt auf den größten Meßbereich der Anwendungen, für die die Serie bestimmt ist.

Des weiteren werden zwei einen Winkel einschließende und von außen zugängliche Spalten 5a,5b ausgespart, die achsparallel bezüglich der Aufnahmebohrung 3 verlaufen und deren Schnittlinie 7 nahe des Umfangs des Vollzylinders liegt. Die Spalten 5a,5b verlaufen von der Schnittlinie 7 aus in Richtung des Mittelpunkts der unteren der zwei Bohrungen 4b,4d rechts bzw. links von der Aufnahmebohrung 3 und enden kurz vor der jeweiligen Bohrung 4b,4d.

Damit stehen Grundkörper für eine Vielzahl von Anwendungen mit dem gleichen Meßbereich zur Verfügung. Aufgrund der gleichen Parameter für die ganze Serie kann die Herstellung dieser Grundkörper sehr preisgünstig erfolgen.

Erst jetzt wird eine Feinabstimmung für eine konkrete Anwendung durchgeführt.

Je nach gewünschtem Nennkraftwert wird der erforderliche Durchmesser der Bohrungen 4a-4d bestimmt und die bislang einheitlich ausgeführten Bohrungen 4a-4d entsprechend erweitert. Anschließend werden die Spalten 5a,5b mit der jeweils nächsten Bohrung 4b bzw. 4d verbunden und ebenso die jeweils übereinanderliegenden Bohrungen 4a und 4b bzw. 4c und 4d. Durch die von außen zugänglichen Spalten 5a,5b ist dies besonders einfach möglich und kann durch Sägen oder andere Methoden, wie Erodieren, erfolgen. Mit dieser Maßnahme des Verbindens von Spalten 5a,5b und Bohrungen 4a und 4b bzw. 4c und 4d wird der Doppelbiegebalken erzeugt, der die Federwirkung des Federkörpers 1 ergibt und damit die zu erfassende kraftproportionale Oberflächenänderung bei Einwirken einer Kraft durch ein in der Aufnahmebohrung 3 eingesetztes Element ermöglicht.

Schließlich werden noch die Dehnmeßstreifen über den Bohrungen 4a-4d angebracht und der gefertigte Federkörper 1 in einem nicht dargestellten Gehäuse angebracht und verkabelt. Alternativ können die Dehnmeßstreifen bereits vor dem Erweitern der Bohrungen 4a-4d aufgebracht werden. In diesem Fall erfolgt das Aufbohren von der den Dehnmeßstreifen abgewandten Seite der Bohrungen 4a-4d.

Die Dehnmeßstreifen sowie Mittel zur Verbindung mit dem Außengehäuse sind in der Figur nicht dargestellt.

Mit dem beschriebenen Verfahren wird ein Federkörper 1 aus einem vorgefertigten Teil gefertigt, der als Doppelbiegebalkenanordnung deren typische gute Eigenschaften aufweist. Darüber hinaus ist aber durch die Herstellung eines Grundtyps in größerer Stückzahl, der lediglich noch feinabgestimmt werden muß, zusätzlich eine günstige und flexible Fertigung mit dem erfindungsgemäßen Verfahren möglich.

## Patentansprüche

1. Verfahren zur Fertigung eines in einem Kraftsensor zur Messung von Kräften eingesetzten Federkörpers (1), der eine Aufnahmebohrung (3) zur Aufnahme eines Teils eines einer Belastung ausgesetzten Elementes aufweist und dessen Federwirkung durch bezüglich der Aufnahmebohrung (3) achsparallele Bohrungen (4a-4d) und Spalten (5a,5b) erzielt wird, wobei an geeigneter Stelle an dem Federkörper (1) Dehnmeßstreifen aufgebracht werden zum Erfassen einer durch die durch das Element ausgeübten Kraft bewirkten Oberflächendehnung und zum Erzeugen einer diese Oberflächendehnung abbildenden Spannung, und wobei mit der Größe der Bohrungen (4a-4d) der gewünschte Nennkraftwert festlegt wird,
das die folgenden Schritte umfaßt:
a) Erstellen eines Vorprodukts für den Federkörper (1) mit Aufnahmebohrung (3), sowie durchgehenden Spalten (5a,5b) und Bohrungen (4a-4d), wobei der Durchmesser der Bohrungen (4a-4d) entsprechend dem größten gewünschten Meßbereich für eine Anzahl von Federkörpern (1) gewählt wird,
b) Erweitern der Bohrungen (4a-4d) des Federkörpers (1) entsprechend einem gewünschten Nennkraftwert für eine spezielle Applikation, und
c) Verbinden von Bohrungen (4a-4d) und Spalten (5a,5b) des Federkörpers (1) durch Auftrennen der sie verbindenden Bereiche (6a-6d) des Federkörpers (1) zur Erzeugung der Federwirkung.

2. Verfahren nach Anspruch 1,
**dadurch gekennzeichnet,**
**daß** die Bohrungen (4a-4d) und Spalten (5a,5b) in dem Federkörper (1) in Schritt a) derart positioniert und in Schritt c) derart miteinander verbunden werden, daß sich ein Doppelbiegebalken ergibt.

3. Verfahren nach Anspruch 1 oder 2,
**dadurch gekennzeichnet,**
**daß** die in Schritt a) angebrachten Spalten (5a,5b) zwei von außen zugängliche Spalten (5a,5b) sind, die jeweils bis kurz vor eine der Bohrungen (4b,4d) reichen und die in Schritt c) bis zu dieser jeweiligen Bohrung (4b,4d) verlängert werden.

4. Verfahren nach einem der voranstehenden Ansprüche,
**dadurch gekennzeichnet,**
**daß** das Verbinden der Bohrungen (4a/4b,4c/4d) untereinander und mit den Spalten (5a,5b) durch Sägen oder Erodieren erfolgt.

5. Verfahren nach einem der voranstehenden Ansprüche,
**dadurch gekennzeichnet,**
**daß** die für die Erfassung der Oberflächenänderungen eingesetzten Dehnmeßstreifen im Anschluß an einen der Schritte a), b) oder c) an dem Federkörper (1) angebracht werden.

6. Verfahren nach einem der voranstehenden Ansprüche,
**dadurch gekennzeichnet,**
**daß** die Dehnmeßstreifen über den vier oder zwei ausgewählten der vier für die Meßbereichsanpassung erweiterten oder zu erweiternden Bohrungen (4a-4d) angebracht werden.

7. Verfahren nach einem der voranstehenden Ansprüche,
**dadurch gekennzeichnet,**
**daß** die für die Erfassung der Oberflächenänderungen eingesetzten Dehnmeßstreifen als Vollbrücke oder als Halbbrücke geschaltet werden.

## Claims

1. A method for manufacturing a spring unit (1) used in a force sensor for measuring forces, which has a receiving hole (3) to receive a part of an element exposed to a loading and whose spring action is achieved by means of axially parallel holes (4a-4d) and slots (5a, 5b) with respect to the receiving hole (3), wherein at a suitable point on the spring unit (1) there are attached expansion measuring strips to record any surface expansion produced by the force exerted by the element and to produce a stress which reproduces this surface expansion and wherein the desired nominal force value is specified with the size of the holes (4a-4d),
which comprises the following steps:
a) creating an initial product for the spring unit (1) with receiving hole (3), as well as continuous slots (5a, 5b) and holes (4a-4d), wherein the diameter of the holes (4a-4d) corresponding to the largest desired measurement range for a number of spring units (1) is selected,
b) expanding the holes (4a-4d) of the spring unit (1) according to a desired nominal force value for a special application, and
c) linking the holes (4a-4d) and slots (5a, 5b) of the spring unit (1) by dividing the regions (6a-6d) of the spring unit (1) connecting them to produce the spring action.

2. The method according to Claim 1,
**characterised in,**
**that** the holes (4a-4d) and slots (5a, 5b) in the spring unit (1) in step a) are positioned and in step c) are linked one to another such that a double bending beam is obtained.

3. The method according to Claim 1 or 2,
**characterised in,**
**that** the slots (5a, 5b) applied in step a) are slots (5a, 5b) accessible from the outside which extend in each case as far as just in front of one of the holes (4b, 4d) and are lengthened in step c) as far as this respective hole (4b, 4d).

4. The methods according to one of the preceding Claims,
**characterised in,**
**that** the linking of the holes (4a/4b, 4c/4d) one with the other and with the slots (5a, 5b) is accomplished by sawing or erosion.

5. The methods according to one of the preceding Claims,
**characterised in,**
**that** the expansion measuring strips used to record the surface changes are attached to the spring unit (1) following one of steps a), b) or c).

6. The methods according to one of the preceding Claims,
**characterised in,**
**that** the expansion measuring strips are attached above the four or two selected holes of the four holes (4a-4d) expanded or to be expanded for adaptation of the measurement range.

7. Methods according to one of the preceding Claims,
**characterised in,**
**that** the expansion measuring strips used to record the surface changes are connected as a full bridge or as a half-bridge.

## Revendications

1. Procédé pour la fabrication d'un corps à ressort (1) utilisé dans un capteur de force pour la mesure de forces, qui présente un alésage récepteur (3) destiné à recevoir une pièce d'un élément soumis à une sollicitation et donc l'effet ressort est atteint grâce à des alésages (4a-4d) et des fentes (5a, 5b) parallèles en axe à l'alésage récepteur (3), des bandes de mesure d'extension étant appliquées à un endroit adéquat sur le corps à ressort (1) pour l'évaluation d'une extension de surface résultant d'une force exercée par l'élément et pour la production d'une tension illustrant cette extension de surface, et la valeur de force nominale souhaitée étant fixée avec la taille des alésages (4a-4d), qui englobe les phases suivantes :
a) Réalisation d'une ébauche pour le corps à ressort (1) avec alésage récepteur (3) ainsi que fentes traversantes (5a, 5b) et alésages (4a-4d), le diamètre des alésages (4a-4d) étant choisi en fonction de la zone de mesure la plus importante souhaitée pour un certain nombre de corps à ressort (1) ;
b) Elargissement des alésages (4a-4d) du corps à ressort (1) en fonction d'une valeur de force nominale souhaitée pour une application spéciale, et
c) Liaison des alésages (4a-4d) et des fentes (5a, 5b) du corps à ressort (1) par séparation des zones les reliant (6a-6d) du corps à ressort (1) pour production de l'effet ressort.

2. Procédé selon la revendication 1,
**caractérisé en ce que**
les alésages (4a-4d) et fentes (5a, 5b) sont positionnés dans le corps à ressort (1) dans la phase a) et reliés ensemble dans la phase c) de manière à obtenir une barre à double courbure.

3. Procédé selon la revendication 2,
**caractérisé en ce que**
les fentes (Sa, 5b) pratiquées dans la phase a) sont deux fentes (5a, 5b) accessibles de l'extérieur, qui arrivent respectivement peu avant un des alésages (4b, 4d) et qui sont prolongées dans la phase c) jusqu'à cet alésage respectif (4 b, 4d).

4. Procédé selon une des revendications précédentes,
**caractérisé en ce que**
la liaison des alésages (4a/4b/4c/4d) entre eux et avec les fentes (5a, 5b) est faite par sciage et érosion.

5. Procédé selon une des revendications précédentes,
**caractérisé en ce que**
les bandes de mesure d'extension utilisées pour l'évaluation des modifications de surface sont appliquées sur le corps à ressort (1) consécutivement à une des phases a), b) ou c).

6. Procédé selon une des revendications précédentes,
**caractérisé en ce que**
les bandes de mesure d'extension sont appliquées sur quatre ou deux alésages sélectionnés parmi les quatre alésages (4a-4d) élargis ou à élargir pour l'adaptation de la zone de mesure.

7. Procédé selon une des revendications précédentes,
**caractérisé en ce que**
les bandes de mesure utilisées pour l'évaluation des modifications de surface sont branchées en pont intégral ou en demi-pont.
